# EUROPÄISCHE PATENTSCHRIFT

(11) **EP 0 785 859 B1**
(45) Veröffentlichungstag und Bekanntmachung des Hinweises auf die Patenterteilung: **02.12.1998**
(21) Anmeldenummer: 95932782.6
(22) Anmeldetag: 21.09.1995
(51) Int. Cl.: B29C 67/00

(54) **VERFAHREN UND VORRICHTUNG ZUM HERSTELLEN EINES DREIDIMENSIONALEN OBJEKTES**
PROCESS AND APPARATUS FOR MANUFACTURING THREE-DIMENSIONAL OBJECTS
PROCEDE ET DISPOSITIF DE FABRICATION D'OBJETS TRIDIMENSIONNELS

(30) Priorität: 13.10.1994 DE 4436695
(43) Veröffentlichungstag der Anmeldung: 30.07.1997
(73) Patentinhaber: 3 D Systems, Inc., Valencia, CA 91355 (US)
(72) Erfinder: Fruth, Carl, 92331 Parsberg (DE); Langer, Hans J., 82166 Gräfelfing (DE)
(74) Vertreter: Hess, Peter K., Dipl.-Phys.
(86) Internationale Anmeldenummer: EP9503725
(87) Internationale Veröffentlichungsnummer: WO9611790

(56) Entgegenhaltungen:
- EP-A- 0 338 751
- EP-A- 0 590 957
- DE-C- 4 309 524
- US-A- 5 198 159

## Beschreibung

Die Erfindung bezieht sich auf ein Verfahren zum Herstellen eines dreidimensionalen Objektes nach dem Oberbegriff des Patentanspruches 1, sowie auf eine Vorrichtung zum Herstellen eines dreidimensionalen Objektes nach dem Oberbegriff des Anspruchs 18.

Ein Verfahren zum Herstellen eines dreidimensionalen Objektes ist unter dem Begriff "Stereolithographie" bekannt. Hierbei wird auf einen Träger bzw. eine bereits verfestigte Schicht eine Schicht eines flüssigen oder pulverförmigen Materials aufgetragen und durch Bestrahlen mit einem gerichteten Lichtstrahl, beispielsweise einem Laserstrahl, an dem Objekt entsprechenden Stellen verfestigt. Durch sukzessives Verfestigen einer Vielzahl von aufeinanderfolgenden Schichten wird das Objekt schichtweise hergestellt.

Ein derartiges Verfahren, bei dem zusammen mit dem Objekt Stützkonstruktionen zum Stützen von Teilen des Objektes bzw. des gesamtes Objektes verfestigt werden, ist aus der EP-A-0 338 751 bekannt.

Beim Aufbau von Stützkonstruktionen entstehen jedoch Schwierigkeiten der folgenden Art.

Bei filigranen Strukturen sowie bei der Verschneidung von Flächen werden wegen der im CAD-Modell getrennten Flächenverbunde mehrere Einzelstützen erzeugt. Diese können dicht nebeneinander liegen und/oder sich überschneiden bzw. durchdringen. Bei der Belichtung der Stützkonstruktion werden die Konturlinien der Einzelstützen in geringstem Abstand zueinander belichtet. Dabei verschmelzen sie miteinander. Die entstandene Stützkonstruktion läßt sich ohne Zerstörung des Bauteiles nicht oder nur sehr schwer entfernen.

Um das Verschmelzen dicht nebeneinanderliegender Konturlinien von Einzelstützen zu verhindern, ist es möglich, die Stützen ohne Kontur zu belichten. Die Stützen müssen dann jedoch sehr hart belichtet werden, d. h. es muß ein hoher Grad an Verfestigung erzeugt werden, um ein Ausfransen der Stützen an den Rändern zu verhindern. Die so erzeugte Stützkonstruktion ist wiederum nur sehr mühsam vom Bauteil zu entfernen oder kann ohne Zerstörung desselben nicht entfernt werden.

Aus der DE-C-43 09 524 ist ein Verfahren zum Herstellen eines dreidimensionalen Objektes bekannt, bei dem das gesamte Objekt bzw. jede Schicht des zu bildenden Objektes in einen inneren Kernbereich und einen äußeren Hüllbereich zerlegt wird und die Strahlungseinwirkung im Kernbereich und im Hüllbereich zur Erzeugung unterschiedlicher Eigenschaften beider Bereiche verschieden gesteuert wird. Die Zerlegung des zu bildenden Objektes in einen Hüllbereich und einen Kernbereich erfolgt in einem Rechner. Der Zerlegung des zu bildenden Objektes in Hüllbereich und Kernberich entsprechende Objektdaten werden einem weiteren Rechner zur Verfügung gestellt, der eine Bestrahlungseinrichtung zum Verfestigen der Schichten des zu bildenden Objektes steuert. Durch die Zerlegung ist es möglich, ein Objekt mit unterschiedlichen und den jeweiligen Erfordernissen entsprechenden vorteilhaften Baustilen aufzubauen.

Aus der WO-A-94/07 681 ist ein Verfahren zum Herstellen eines dreidimensionalen Objekts durch aufeinanderfolgendes Verfestigen von übereinanderliegenden Schichten des Objekts bekannt, bei dem jeweils zunächst Teilbereiche einer Schicht verfestigt und dabei mit darunterliegenden Teilbereichen der vorher verfestigten Schicht zu mehrschichtigen Zellen verbunden werden, und danach benachbarte Teilbereiche derselben Schicht durch Verfestigen von schmalen Verbindungsbereichen miteinander verbunden werden. Dadurch soll eine Verformung des Objekts verringert werden.

Aus der EP-A-0 338 751 ist eine Vorrichtung nach dem Oberbegriff des Anspruchs 18 bekannt.

Es ist Aufgabe der Erfindung, ein Verfahren zum Herstellen eines dreidimensionalen Objektes bereitzustellen, bei dem eine zusammen mit dem Objekt erzeugte Stützkonstruktion einen homogenen Aufbau aufweist, in einer kurzen Zeit hergestellt werden kann und nach der Fertigstellung des Objektes leicht von diesem entfernt werden kann sowie eine Vorrichtung zur Durchführung dieses Verfahrens bereitzustellen.

Die Aufgabe wird gelöst durch das Verfahren nach Patentanspruch 1 und die Vorrichtung nach Patentanspruch 18. Weiterbildungen sind in den Unteransprüchen gegeben.

Durch die Zerlegung der Stützkonstruktion in dreidimensionaler Weise in den Kernbereich und den Hüllbereich wird die erzeugte Stützkonstruktion sehr homogen, da es keine Doppelbestrahlung bzw. Doppelbelichtung innerhalb der Stützkonstruktion gibt. Durch Steuerung der Strahlungseinwirkung im Hüllbereich verschieden von der im Kernbereich kann der Hüllbereich so aufgebaut werden, daß eine leicht lösbare Anbindung an das Objekt erzeugt wird, und der Kernbereich kann so aufgebaut werden, daß eine ausreichend stabile Stützkonstruktion mit geringer Bauzeit erzeugt wird und Verzugskräfte bei der Bildung des Objektes bei geringer Deformation der Stützkonstruktion aufgenommen werden können.

Es folgt die Beschreibung von Ausführungsbeispielen anhand der Figuren.

Von den Figuren zeigen:
- Fig. 1: Eine schematische Darstellung einer Vorrichtung zur Durchführung des erfindungsgemäßen Verfahrens;
- Fig. 2: eine schematische Querschnittansicht eines Teiles eines zu bildenden Objektes zusammen mit einer Stützkonstruktion gemäß einer Ausführungsform der Erfindung;
- Fig. 3: einen Schnitt entlang der Linie A - A von Fig. 2;
- Fig. 4: eine schematische Querschnittansicht eines zu bildenden Objektes mit einer Stützkonstruktion gemäß einer weiteren Ausführungsform der Erfindung.

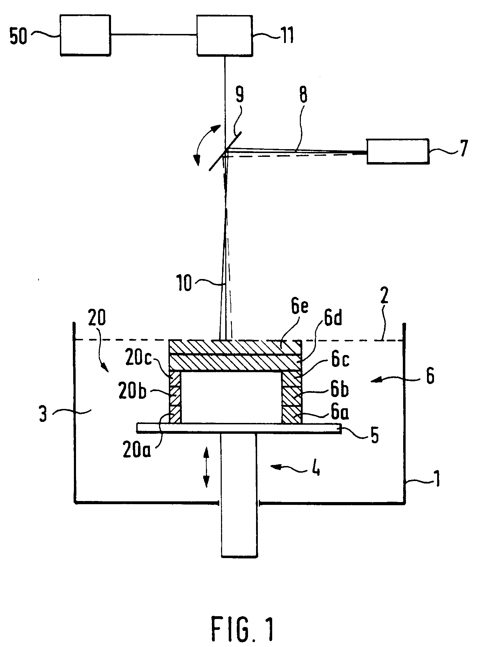

Wie am besten aus Fig. 1 ersichtlich ist, weist eine Vorrichtung zur Durchführung des Verfahrens einen auf seiner Oberseite offenen Behälter 1 auf, der bis einem Niveau bzw. einer Oberfläche 2 mit einem unter Einwirkung elektromagnetischer Strahlung verfestigbaren Material 3 gefüllt ist. In dem Behälter 1 befindet sich ein Träger 4 mit einer im wesentlichen ebenen und horizontalen Trägerplatte 5, die parallel zur Oberfläche 2 angeordnet ist und mittels einer nicht gezeigten Höheneinstellvorrichtung senkrecht zur Oberfläche 2 bzw. zur Trägerplatte 5 auf und ab verschoben und positioniert werden kann.

Auf der Trägerplatte 5 ist ein zu bildendes Objekt 6 zusammen mit einer Stützkonstruktion 20 angeordnet, wobei das Objekt 6 und die Stützkonstruktion 20 jeweils aus einer Mehrzahl von Schichten 6a, 6b, 6c, 6d und 6e bzw. 20a, 20b und 20c, die sich jeweils parallel zur Oberfläche 2 und zur Trägerplatte 5 erstrecken, aufgebaut sind.

Über dem Behälter 1 ist eine nicht gezeigte Vorrichtung zum Glätten der Oberfläche 2 des verfestigbaren Materiales 3 angeordnet.

Oberhalb des Behälters 1 ist eine Bestrahlungseinrichtung 7, beispielsweise ein Laser, angeordnet, die einen gerichteten Lichtstrahl 8 abgibt. Der gerichtete Lichtstrahl 8 wird über eine Ablenkeinrichtung 9, beispielsweise einen Drehspiegel, als abgelenkter Strahl 10 auf die Oberfläche 2 des verfestigbaren Materiales 3 in dem Behälter 1 abgelenkt. Eine Steuerung 11 steuert die Ablenkeinrichtung 9 derart, daß der abgelenkte Strahl 10 auf jede gewünschte Stelle der Oberfläche 2 des verfestigbaren Materiales 3 in dem Behälter 1 auftrifft. Die Steuerung 11 ist mit einer Computereinheit 50 verbunden, die der Steuerung 11 die entsprechenden Daten zur Verfestigung der Schichten des Objektes 6 und der Stützkonstruktion 20 liefert.

Bei dem Verfahren zum Herstellen des dreidimensionalen Objektes wird die Trägerplatte 5 in einem ersten Schritt in dem Behälter 1 so positioniert, daß zwischen der Oberseite der Trägerplatte 5 und der Oberfläche 2 des verfestigbaren Materiales 3 in dem Behälter 1 ein gerade der vorgesehen Schichtdicke entsprechender Abstand vorliegt. Die sich über der Trägerplatte 5 befindliche Schicht des verfestigbaren Materiales 3 wird mittels des von der Bestrahlungseinrichtung 7 erzeugten und über die Ablenkeinrichtung 9 und die Steuereinrichtung 11 gesteuerten Lichtstrahles 8, 10 an vorgegebenen, dem Objekt 6 und der zugehörigen Stützkonstruktion 20 entsprechenden Stellen bestrahlt, wodurch das Material 3 verfestigt wird und so eine der Form eines Objektes und der Stützkonstruktion entsprechende feste Schicht 6a bzw. 20a bildet. Das Bilden von weiteren Schichten 6b, 6c, 6d und 6e bzw. 20b und 20c erfolgt sukzessive durch Absenken der Trägerplatte 5 um einen der jeweiligen Schichtdicke entsprechenden Betrag und erneutes Bestrahlen an den dem Objekt 6 bzw. der Stützkonstruktion 20 entsprechenden Stellen.

In der Computereinheit 50 erfolgt eine Berechnung der Objekt- und der Stützkonstruktionsdaten für die Steuerung der Verfestigung jeder Schicht durch Zerlegung eines dreidimensionalen Modelles des Objektes 6 und der Stützkonstruktion 20 in einzelne Schichten. Dabei wird die gesamte dreidimensionale Stützkonstruktion 20 in der Computereinheit 50 in einen Hüllbereich und einen Kernbereich zerlegt. Der Hüllbereich und der Kernbereich bilden zwei eigenständige Teile bzw. Einzelobjekte der Stützkonstruktion. Die Zerlegung des dreidimensionalen Modells der Stützkonstruktion kann auch in einem separaten Computer erfolgen, und die erzeugten Daten können an die Computereinheit 50 übergeben werden. Die Strahlungseinwirkung bei der Verfestigung in jeder Schicht erfolgt nun in unterschiedlicher Art und Weise, je nachdem, ob es sich um den Kernbereich oder den Hüllbereich der Stützkonstruktion handelt. Durch die Zerlegung tritt eine Doppelbelichtung von sich überschneidenden Teilen der Stützkonstruktion nicht mehr auf.

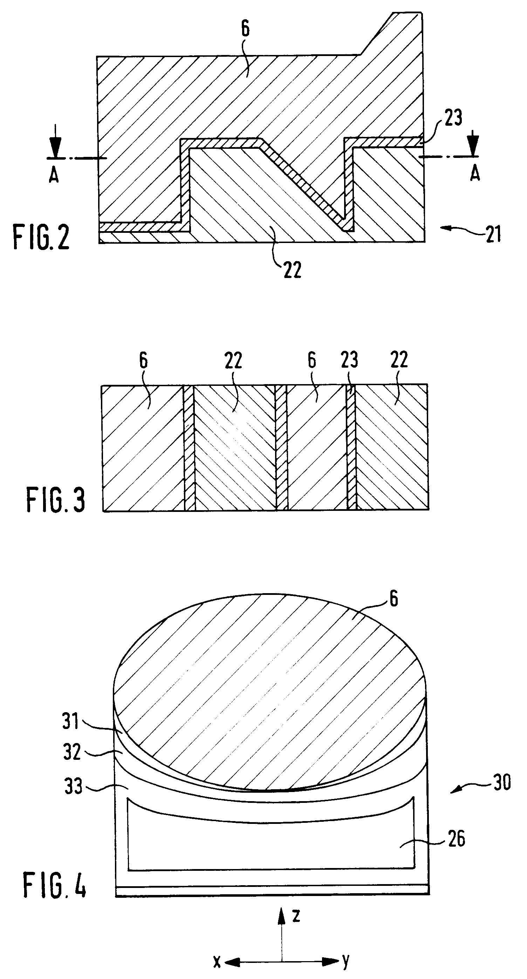

Fig. 2 zeigt einen Schnitt durch eine Stützkonstruktion 21 zusammen mit dem Objekt 6 im Bereich der Anbindung der Stützkonstruktion 21 an das Objekt 6. Die Stützkonstruktion 21 ist in einen Kernbereich 22 und einen Hüllbereich 23 zerlegt, die unterschiedliche Strukturen und damit unterschiedliche Eigenschaften aufweisen. Fig. 3, die einen Schnitt entlang der Linie A-A von Fig. 2 darstellt, veranschaulicht die Anbindung der Stützkonstruktion 21 über deren Hüllbereich 23 an das Objekt 6 in einer Schicht.

Im Kernbereich 22 erfolgt die Strahlungseinwirkung bevorzugt so, daß die Verformung der Stützkonstruktion 21 bei der Erzeugung des Objektes 6 minimal ist. Dazu muß der Kernbereich 22 hart und damit unelastisch belichtet werden, d. h. es muß eine starke Verfestigung erzeugt werden.

Zur Verringerung der erforderlichen Bauzeit und zur Materialersparnis wird der Kernbereich 22 der Stützkonstruktion 21 nur in einzelnen beabstandeten Teilbereichen verfestigt, die entweder gar nicht oder durch Verbindungsstege miteinander verbunden sind. Es ist bei ausreichend stabiler Verfestigung des Hüllbereiches 23 auch möglich, den Kernbereich 22 überhaupt nicht zu verfestigen. Nichtverfestigtes Material kann nach der Fertigstellung durch im Hüllbereich und/oder im Kernbereich vorgesehene Öffnungen abgelassen werden.

Die Verfestigung der Stützkonstruktion 21 im Hüllbereich 23 kann bevorzugt zur Erzeugung einer ausreichend stabilen, aber leicht lösbaren Anbindung der Stützkonstruktion an das Objekt erfolgen. Dazu erfolgt die Belichtung im Hüllbereich weich, d. h. eine geringere Verfestigung als im Kernbereich wird erzeugt, so daß der Hüllbereich der Stützkonstruktion im Bereich der Anbindung an das Objekt nicht unlösbar an dem Objekt anhaftet.

Im Hüllbereich 23 der Stützkonstruktion können ebenfalls einzelne beabstandete Teilbereiche verfestigt werden, die entweder gar nicht oder durch Verbindungsstege miteinander verbunden sind. Der Abstand der Teilbereiche im Hüllbereich ist bevorzugt kleiner als der Abstand der Teilbereiche im Kernbereich, damit das Objekt ausreichend gestützt wird. In Bereichen des Hüllbereiches 23 der Stützkonstruktion 21, die an das Objekt angrenzen, ist es möglich, nur einzelne zusammenhängende Blöcke bzw. Klötzchen des Hüllbereiches zu verfestigen, wodurch eine perforierte Anbindung an das Objekt erzeugt wird, die die Ablösung der Stützkonstruktion nach der Fertigstellung des Objektes erleichtert.

Die Wandstärke des Hüllbereiches ist innerhalb der gesamten Stützkonstruktion und/oder von Schicht zu Schicht einstellbar. Damit kann der Abstand der Stützkonstruktion zu Wänden des zu bildenden Objektes eingestellt werden.

Durch geeignete Wahl der Strahlungseinwirkung bzw. der Belichtungstechnik können gegenüber dem herkömmlichen Verfahren Bauzeiteinsparungen von bis zu 80% erreicht werden.

Wie am besten aus Fig. 4 ersichtlich ist, besteht eine weitere Ausführungsform des Verfahrens darin, eine Stützkonstruktion 30 in mehrere Schalen bildende Hüllbereiche 31, 32, 33 und einen Kernbereich 26 zu zerlegen, wobei diese Bereiche 31, 32, 33, 26 jeweils eigenständige Teile bzw. Einzelobjekte der Stützkonstruktion sind. Verschiedene Schalendicken sind möglich. Ein Hüllbereich kann beispielsweise den Kernbereich vollständig oder nur teilweise einschließen. So besitzt gemäß Fig. 4 die Hülle 31 keine Z-Dicke, hingegen jedoch XY-Wandstärke. Der Hüllbereich 32 besitzt lediglich Z-Dicke, während der Hüllbereich 33 eine gleichmäßige Wandstärke in XY- und Z-Richtung aufweist. Der Kern 26 kann bei dieser Stützkonstruktion mit sehr groß beabstandeten Teilbereichen gebaut werden. Mit einer solchen schalenförmigen Zerlegung ist es möglich, den Kraftfluß durch die Stützkonstruktion bei minimaler Bauzeit optimal zu leiten.

## Patentansprüche

1. Verfahren zum Herstellen eines dreidimensionalen Objektes, bei dem das Objekt (6) durch aufeinanderfolgendes Verfestigen einzelner Schichten (6a, 6b, 6c, 6d, 6e) aus verfestigbarem flüssigem oder pulverförmigem Material (3) durch Einwirkung einer elektromagnetischen Strahlung (8, 10) erzeugt wird und bei dem zusammen mit dem Objekt (6) eine Stützkonstruktion (20, 21) zum Stützen des Objektes (6) verfestigt wird,
dadurch gekennzeichnet, daß
die Stützkonstruktion (20, 21) in dreidimensionaler Weise in einen inneren Kernbereich (22) und einen äußeren Hüllbereich (23) zerlegt wird und die Strahlungseinwirkung zur Erzeugung unterschiedlicher Eigenschaften beider Bereiche verschieden gesteuert wird.

2. Verfahren nach Anspruch 1, dadurch gekennzeichnet, daß
die Stützkonstruktion (20, 21) schichtweise zusammen mit der Verfestigung der Schichten (6a, 6b, 6c, 6d, 6e) des Objektes (6) verfestigt wird und die Zerlegung in den Hüllbereich (23) und den Kernbereich (22) in jeder Schicht (20a, 20b, 20c) erfolgt.

3. Verfahren nach Anspruch 1 oder 2, dadurch gekennzeichnet, daß
der Kernbereich (22) durch die Strahlungseinwirkung mittels harter Belichtung so belichtet wird, daß die Verformung der Stützkonstruktion (20, 21) bei der Erzeugung des Objektes (6) minimal ist und daß die Strahlungseinwirkung im Hüllbereich (23) zur Erzeugung der Anbindung der Stützkonstruktion an das Objekt erfolgt.

4. Verfahren nach Anspruch 3, dadurch gekennzeichnet, daß
der Kernbereich (22) durch die Strahlungseinwirkung mittels harter Belichtung so belichtet wird, daß eine starke Verfestigung erzeugt wird und daß der Hüllbereich (23) durch Strahlungseinwirkung mittels weicher Belichtung so belichtet wird, daß eine geringe Verfestigung erzeugt wird.

5. Verfahren nach einem der Ansprüche 1 bis 4, dadurch gekennzeichnet, daß
im Kernbereich (22) einzelne beabstandete erste Teilbereiche verfestigt werden.

6. Verfahren nach Anspruch 5, dadurch gekennzeichnet, daß
die ersten Teilbereiche durch Verbindungsstege miteinander verbunden werden.

7. Verfahren nach einem der Ansprüche 1 bis 6, dadurch gekennzeichnet, daß
im Hüllbereich (23) einzelne beabstandete zweite Teilbereiche verfestigt werden.

8. Verfahren nach Anspruch 7, dadurch gekennzeichnet, daß
die zweiten Teilbereiche durch Verbindungsstege miteinander verbunden werden.

9. Verfahren nach Anspruch 7 oder 8, dadurch gekennzeichnet, daß
der Abstand der Teilbereiche im Hüllbereich (23) kleiner als der Abstand der Teilbereiche im Kernbereich (22) ist.

10. Verfahren nach einem der Ansprüche 6 bis 9, dadurch gekennzeichnet, daß
in Bereichen des Hüllbereiches (23), die an das Objekt (6) angrenzen, nur einzelne Schichten oder eine Anzahl von übereinanderliegenden Schichten oder einzelne Teilbereiche einer Schicht zur Erzeugung einer perforierten Anbindung an das Objekt (6) verfestigt werden.

11. Verfahren nach einem der Ansprüche 1 bis 10, dadurch gekennzeichnet, daß
die Strahlungseinwirkung so gesteuert wird, daß eine Wandstärke des Hüllbereiches (23) für die gesamte Stützkonstruktion gleich ist.

12. Verfahren nach einem der Ansprüche 1 bis 10, dadurch gekennzeichnet, daß
eine Wandstärke des Hüllbereiches (23) über die Stützkonstruktion einstellbar ist.

13. Verfahren nach einem der Ansprüche 1 bis 10, dadurch gekennzeichnet, daß
das zu bildende Objekt (6) in dreidimensionaler Weise in einen Kernbereich und einen Hüllbereich zerlegt wird und daß der Kernbereich durch die Strahlungseinwirkung mittels harter Belichtung so belichtet wird, daß die Verformung des Objektes bei und nach der Verfestigung minimal ist und daß die Strahlungseinwirkung im Hüllbereich zur Erzeugung einer glatten und genauen Oberfläche erfolgt.

14. Verfahren nach einem der Ansprüche 1 bis 13, dadurch gekennzeichnet, daß
der Kernbereich der Stützkonstruktion in mindestens einen zweiten Hüllbereich (32, 33) und einen zweiten Kernbereich (26) zerlegt wird und die Strahlungseinwirkung zur Erzeugung unterschiedlicher Eigenschaften jedes Bereiches verschieden gesteuert wird.

15. Verfahren nach Anspruch 14, dadurch gekennzeichnet, daß
die Wandstärken der Hüllbereiche (31, 32, 33) einstellbar sind.

16. Verfahren nach einem der Ansprüche 1 bis 15, dadurch gekennzeichnet, daß
im Hüllbereich (23, 31, 32, 33) Öffnungen gebildet werden, durch die unverfestigtes Material aus dem Kernbereich (22, 26) ausfließen kann.

17. Verfahren nach Ansruch 16, dadurch gekennzeichnet, daß
im Kernbereich (22, 26) Öffnungen gebildet werden, durch die unverfestigtes Material aus dem Kernbereich (22, 26) ausfließen kann.

18. Vorrichtung zum Herstellen eines dreidimensionalen Objektes mit
einem Behälter (1) zur Aufnahme des durch Einwirkung elektromagnetischer Strahlung verfestigbaren Materials (3), einem höhenverstellbaren Träger (4, 5) zum Tragen des Objektes (6), und einer Vorrichtung (7, 9, 11) zum Verfestigen einer Schicht des Materials (3) mittels elektromagnetischer Strahlung
dadurch gekennzeichnet, daß
die Vorrichtung zur Durchführung des Verfahrens nach einem der Ansprüche 1 bis 14 vorgesehen ist und eine Computereinheit (50) zur Berechnung der Zerlegung der Stützkonstruktion (20) in den Hüllbereich und den Kernbereich vorgesehen ist.

## Claims

1. Method for manufacturing a three-dimensional object, wherein the object (6) is manufactured by successive solidification of single layers (6a, 6b, 6c, 6d, 6e) of solidifiable liquid or powdery material (3) under the influence of electromagnetic radiation (8,10) and wherein together with the object (6) a support construction (20, 21) is solidified for supporting the object, **characterized in that** the support construction (20, 21) is divided in a three-dimensional way in an internal core part (22) and an external covering part (23), and wherein the influence of the radiation is controlled to produce different properties in the two parts.

2. Method according to claim 1 characterized in that the support construction (20, 21) is solidified layer-by-layer together with the solidification of the layers (6a, 6b, 6c, 6d, 6e) of the object (6) and that the division into covering part (23) and the core part (22) takes place in every layer.

3. Method according to claim 1 or 2 characterized in that the core part (22) is exposed to the influence of hard radiation in such a way that the deformation of the support construction (20, 21) during the manufactoring of the object (6) is minimal, and that the influence of the radiation in the covering part (23) is carried out to produce a connection of the support construction to the object.

4. Method according to claim 3 characterized in that the core part (22) is exposed to the influence of hard radiation in such a way that a strong solidification is produced, and that the covering part (23) is exposed to soft radiation in such a way that only a week solidification is produced.

5. Method according to one of the claims 1 to 4, characterized in that in the core part (22) single distant first parts are solidified.

6. Method according to claim 5 characterized in that the first parts are connected to each other by joining bridges.

7. Method according to one of the claims 1 to 6, characterized in that in the covering part (23) single distant second parts are solidified.

8. Method according to claim 7 characterized in that the second parts are connected to each other by joining bridges.

9. Method according to claim 7 or 8 characterized in that the distance of the parts in the covering part (23) is smaller than the distance of the parts in the core part (22).

10. Method according to one of the claims 6 to 9 characterized in that in parts of of the covering part (23), which are adjacent to the object, only single layers or a number of overlapping layers or single parts of a layer are solidified to produce a perforated connection to the object.

11. Method according to one of the claims 1 to 10 characterized in that the influence of the radiation is controlled in such a way that the thickness of the covering part (23) is constant for the whole support construction.

12. Method according to one of the claims 1 to 10 characterized in that a thickness of the covering part is adjustable throughout the support construction.

13. Method according to one of the claims 1 to 10 characterized in that the object (6) to be built is divided in a three-dimensional way in a core part and a covering part and that the core part is exposed to the influence of hard radiation in such a way that the deformation of the object during or after the solidification is minimal, and that the influence of the radiation on the covering part takes place to produce a smooth and exact surface.

14. Method according to one of the claims 1 to 13 characterized in that the core part of the support construction is divided into at least a second covering part (32, 33) and a second core part (26) and that the influence of the radiation is controlled differently to produce different properties for each part.

15. Method according to claim 14 characterized in that the thicknesses of the covering parts (31, 32, 33) are adjustable.

16. Method according to of one of the claims 1 to 15 characterized in that openings are formed in the covering part (23, 31, 32, 33) through which material, which has not solidified, can flow out of the core part (22, 26).

17. Method according to claim 16 characterized in that openings are formed in the core part (22, 26) through which material, which has not solidified can flow out of the core part (22, 26).

18. Apparatus for manufacturing a three-dimensional object comprising a container (1) for receiving the material (3) solidifiable under the influence of electromagnetic radiation, a height adjustable carrier (4, 5) for carrying the object (6), and an apparatus (7, 9, 11) for solidifying a layer of the material (3) by means of electromagnetic radiation **charaterized in that** the apparatus is provided for carrying out the method according to one of the claims 1 to 14 and in that a computer unit (50) for the calculation of the division of the support construction (20) into a covering part and a core part is provided.

## Revendications

1. Procédé pour la fabrication d'un objet tridimensionnel, dans lequel l'objet (6) est produit par solidification successive de couches individuelles (6a, 6b, 6c, 6d, 6e) en une matière liquide ou pulvérulente (3) solidifiable par l'action d'un rayonnement électromagnétique (8, 10) et dans lequel une structure d'appui (20, 21) destinée à soutenir l'objet (6) est solidifiée en même temps que l'objet (6), caractérisé en ce que la structure d'appui (20, 21) est décomposée, de façon tridimensionnelle, en une zone de coeur interne (22) et une zone d'enveloppe externe (23) et en ce que l'action du rayonnement électromagnétique est commandée de façon différente pour produire des propriétés différentes dans les deux zones.

2. Procédé suivant la revendication 1, caractérisé en ce que la structure d'appui (20, 21) est solidifiée par couches en même temps que la solidification des couches (6a, 6b, 6c, 6d, 6e) de l'objet (6) et en ce que la décomposition en zone d'enveloppe (23) et zone de coeur (22) est pratiquée dans chaque couche (20a, 20b, 20c).

3. Procédé suivant la revendication 1 ou 2, caractérisé en ce que la zone de coeur (22) est exposée à l'action du rayonnement au moyen d'une exposition intense, de façon telle que la déformation de la structure d'appui (20, 21) lors de la production de l'objet (6) soit minimale et en ce que l'action du rayonnement dans la zone d'enveloppe (23) est pratiquée pour opérer la liaison de la structure d'appui avec l'objet.

4. Procédé suivant la revendication 3, caractérisé en ce que la zone de coeur (22) est exposée à l'action du rayonnement au moyen d'une exposition intense, de façon telle qu'il se produise une forte solidification et en ce que la zone d'enveloppe (23) est exposée à l'action du rayonnement au moyen d'une exposition douce, de façon telle qu'il se produise une faible solidification.

5. Procédé suivant l'une quelconque des revendications 1 à 4, caractérisé en ce que des premières zones partielles individuelles distantes sont solidifiées dans la zone de coeur (22).

6. Procédé suivant la revendication 5, caractérisé en ce que les premières zones partielles sont reliées l'une à l'autre par des passerelles de liaison.

7. Procédé suivant l'une quelconque des revendications 1 à 6, caractérisé en ce que des secondes zones partielles individuelles distantes sont solidifiées dans la zone d'enveloppe (23).

8. Procédé suivant la revendication 7, caractérisé en ce que les secondes zones partielles sont reliées l'une à l'autre par des passerelles de liaison.

9. Procédé suivant la revendication 7 ou 8, caractérisé en ce que la distance entre les zones partielles dans la zone d'enveloppe (23) est plus petite que la distance entre les zones partielles dans la zone de coeur (22).

10. Procédé suivant l'une quelconque des revendications 6 à 9, caractérisé en ce que, dans des zones de la zone d'enveloppe (23), qui sont jointives à l'objet (6), seules des couches individuelles ou un certain nombre de couches superposées ou des zones partielles individuelles d'une couche sont solidifiées en vue de produire une liaison perforée à l'objet (6).

11. Procédé suivant l'une quelconque des revendications 1 à 10, caractérisé en ce que l'action du rayonnement est commandée de façon telle qu'il y ait une épaisseur de paroi de la zone d'enveloppe (23) identique pour toute la structure d'appui.

12. Procédé suivant l'une quelconque des revendications 1 à 10, caractérisé en ce qu'il y a une épaisseur de paroi de la zone d'enveloppe (23) réglable sur la structure d'appui.

13. Procédé suivant l'une quelconque des revendications 1 à 10, caractérisé en ce que l'objet à former (6) est décomposé, de façon tridimensionnelle, en une zone de coeur et une zone d'enveloppe, et en ce que la zone de coeur est exposée à l'action du rayonnement au moyen d'une exposition intense, d'une façon telle que la déformation de l'objet pendant et après la solidification soit minimale et en ce que l'exposition au rayonnement dans la zone d'enveloppe est pratiquée pour produire une surface lisse et précise.

14. Procédé suivant l'une quelconque des revendications 1 à 13, caractérisé en ce que la zone de coeur de la structure d'appui est décomposée en au moins une seconde zone d'enveloppe (32, 33) et une seconde zone de coeur (26) et en ce que l'exposition au rayonnement est commandée de façon différente pour produire des propriétés différentes dans chaque zone.

15. Procédé suivant la revendication 14, caractérisé en ce que les épaisseurs de paroi des zones d'enveloppe (31, 32, 33) sont réglables.

16. Procédé suivant l'une quelconque des revendications 1 à 15, caractérisé en ce que des ouvertures sont formées dans la zone d'enveloppe (23, 31, 32, 33), à travers lesquelles la matière non solidifiée peut s'écouler hors de la zone de coeur (22, 26).

17. Procédé suivant la revendication 16, caractérisé en ce que des ouvertures sont formées dans la zone de coeur (22, 26), à travers lesquelles la matière non solidifiée peut s'écouler hors de la zone de coeur (22, 26).

18. Dispositif pour la fabrication d'un objet tridimensionnel avec un récipient (1) destiné à recevoir la matière (3) solidifiable par l'action du rayonnement électromagnétique, un support (4, 5) réglable en hauteur pour porter l'objet (6), et un dispositif (7, 9, 11) pour solidifier une couche de la matière (3) au moyen du rayonnement électromagnétique, caractérisé en ce que le dispositif est prévu pour la mise en oeuvre du procédé suivant l'une quelconque des revendications 1 à 14, et en ce qu'il est prévu une unité de calcul (50) pour calculer la décomposition de la structure d'appui (20) en zone d'enveloppe et zone de coeur.
